# EUROPEAN PATENT APPLICATION

(11) **EP 0 524 911 A1**
(43) Date of publication of application: **27.01.1993**
(21) Application number: 92830279.3
(22) Date of filing: 29.05.1992
(51) Int. Cl.: F16L 55/162, F16L 13/00

(54) **A procedure for adapting and/or protecting and/or restoring the functionality of the inside of a hollow body and/or of damaged pipes and mains and for the jointing of two or more of said bodies, and the means of executing said procedure**

(30) Priority: 21.06.1991 IT RM910449; 17.01.1992 IT RM920032
(71) Applicant: MEGARAD S.r.l., I-00142 Roma (IT)
(72) Inventor: Ambrosio, Angelo, I-00040 Rocca di Papa Roma (IT); Conte, Gennaro, I-80142 Napoli (IT); Zehender, Rodolfo, I-00044 Frascati Roma (IT)
(74) Representative: Sneider, Massimo

(57) **Abstract**

This procedure consists in the following: the realization, with a thermodeformable material, of an object, such as a pipe and/or a pipe coupling, with an outside diameter equal to or larger than the inside diameter of the cavity which requires to be lined; subjecting said thermodeformable object to the necessary treatment in order to make it take on, in its thermoinstable state, the shape of a more or less considerably smaller sized object; the introduction of the lining material, in its thermoinstable state, by means of the application of traction or pressure, inside the hosting object(s); once said introduction has been completed, the procedure consists in submitting the introduced element to the heating treatment required for making it reacquire its thermostable state, until it perfectly adheres to the inside of the object to be lined; while the means for executing said procedure essentially consist of a thermodeformable material, such as to be taken from any basic shape in which it is found in its thermostable state, to a reduced thermoinstable state, from which it may then return to its thermostable state following the application of heat.

## Description

1. A procedure for adapting and/or protecting and/or restoring to working order the inside of a hollow object and/or of damaged pipes and mains and for connecting two or more of said objects, and the means of executing said procedure.

It is a well-known fact that very often, following normal wear and/or due to external reasons and/or to the execution of works, hollow and non-hollow objects may be protected by using materials characterized by either an elastic or plastic dimensional memory, induced by chemical or electronic means, which enables the expansion of the object made of this material, in its thermoinstable state and, following the subsequent application of heat, also enables its return to the shape it had in its thermostable state.

Thermocontracting properties are given to the aforementioned materials by a polymeric material which may take on various shapes, such as, for example, sheets, pipes and threads, as shown in patents 117 025 and 117 026. In the case that this material be used under the form of netting, only the weft or the warp threads are made of this thermo-contracting material, the warp or weft threads, respectivey, being inextensible, therefore, when the material is restored to its thermostable state it contracts in one direction only, i.e., either radially or longitudinally.

Currently known thermocontracting materials are and may be used only for protecting an object from the outside, said property being, therefore, a characteristic of the outside protective covering, such as the coating of pipes, cables and the like.

Furthermore, it is a well-known fact that, very often, following normal wear and/or due to external causes and/or the execution of works, existing ducts or mains are damaged and become no longer usable. In this case it is necessary to replace them or to attempt to restore their original working order.

Replacement of the damaged mains requires the execution of excavations, the laying of the new mains and the filling in of the excavations.

Repair-works also require excavations, in the point in which the damage has occurred, the repair of the damaged mains and the filling in of the hole.

Currently, the relining technique is used; this technique is based on the reconstruction of the internal surface of a damaged by means of the introduction of another pipe, with a smaller diameter and the filling in of the space between the inside of the old pipe and the outside of the new one. This system has several advantages, but also serious drawbacks, amongst which the sometimes considerable reduction of the pipe's diameter, with the consequent reduction of it's flow. Furthermore, if a rigid new pipe is used then this technique may be applied only in the case of short, straight sections; if, on the other hand, flexible new pipes are used, the length of the section which may be internally relined increases, but it is nonetheless limited to the presence of adaptable bends and to the possibility of applying a certain traction to the pipe which is to be introduced.

One attempted solution has been to transversely bend the pipe, so as to reduce the size of its cross-section, subsequently restoring its original cylindrical shape by means of temperature variations or the application of a certain pressure. Apart from the fact that the only material which has been found suitable for such a process is PVC, which is not always acceptable for hygienic and environmental purposes, it must also be noted that, in the case of not sufficiently roomy bends of the hosting pipe, the traction of a transversely bent and extended object, may not always be possible, due to surface friction and to the very low, if not totally inexistent, flexibility of the object itself during the traction of the lining pipe within the pipe to be lined. Furthermore, the considerable reduction of the useful diameter must also be taken into consideration, given the fact that the new internal pipe must necessarily have a smaller outside diameter than the inside diameter of the hosting pipe. Besides, the space between the surfaces of the two pipes must be sealed with a suitable material, in itself a costly and time consuming operation.

The foregoing concerns works to be carried out on mains and/or objects which are not easily accessible from the outside. Nevertheless, there is also the case of two objects and/or pipes which, even though accessible from the outside, need to be connected. It is the case of the connection of two pipes, which is usually achieved by means of welding and/or the use of threaded pipe couplings and/or pressure pipe couplings, solutions which may hardly be applied to polyethylene pipes, for example, or by means of thermocontracting pipe couplings, with the application of tightening bands and/or adhesive bands for adequately sealing the joints. These systems, and especially the last ones, hardly ever successfully pass the pressure tests provided for by standards regulations, due to the fact that the pressure of the fluid running inside the pipes tends to act directly on the joints, which are points of lesser resistance, causing them to yield.

Therefore, the need of a procedure enabling to adapt and/or to protect and/or to restore the working order of a hollow object, however elongated, the inside of which is not accessible from the outside, on the one hand, or the continuity and, therefore the working order, of two successively laid or branching objects or pipes, on the other hand, is strongly felt. With the term "to adapt" we intend to maintain or, in any case, to change the inside shape and/or size or to restore the working order or the continuity of one or more hollow objects, whether they consist of a single pipe or of more than two consecutive or branching pipes.

Another object of this invention are the means for achieving the aforementioned procedure.

The procedure, according to this invention, consists in the following: the adaption, in its thermostable state, of an element, either totally or partially made of a substance provided with an elastic or plastic memory and which is subject to deformation by heat, to a preestablished thermostable hollow object, which may also be a mains, which it is required to form and/or protect and/or restore to working order; the thermal deformation of said element, so as to make it take on a smaller size, in its thermoinstable state; the introduction, inside the aforementioned hollow object, of the smaller sized element, its smaller size being the consequence of its state of thermoinstability, making it touch other objects housed inside the cavity, if necessary; submitting the element to a thermal treatment, thus enabling it to reacquire its thermostable shape, so that the material of which the element is made may adapt itself to and/or line the inside of the hollow object, without the need to gain direct access to the hollow part itself.

In particular, in the case of restoring a pipe to working order, the procedure being the object of this invention consists in the following: the realization, by means of a thermodeformable material, of a pipe, the outside diameter of which should not be smaller than the inside diameter of the pipe to be lined; subjecting said thermodeformable pipe to the necessary treatment so that it may take on, in its thermoinstable state, the form of a pipe, the outside diameter of which is considerably smaller, from approx. one third to one tenth of the inside diameter of the hosting pipe, its extension being proportional to the new section it has acquired; wrapping this pipe, if necessary and in its thermoinstable state, around a special reel, independently located, with regard to the pipe to be lined; introducing the lining pipe in its thermoinstable state, preferably by means of traction, inside the pipe to be lined, whatever its length and regardless of the presence of bends, given the considerable difference of diameters and the flexibility of the lining pipe; once said introduction has been completed, the procedure consists in submitting the introduced pipe to the necessary treatment for making it reacquire its thermostable state, until it perfectly adapts itself to the inside shape and size of the pipe to be lined.

As previously mentioned, the introduction of the pipe modified in both cross-section and length and in its thermoinstable state, inside the pipe to be restored to working order, is preferably executed by means of a traction applied to its free end by a guide rope, for example, or also by means of the application of an either continuous or discontinuous pressure.

Once it has been introduced inside the pipe, the lining pipe must be taken from its thermoinstable to its thermostable state by heating, preferably but not exclusively, by means of a hot liquid circulated through the section of the pipe concerned with the operation. According to this invention, this could be achieved by means of a nozzle spouting an adequately fed flame, a nozzle which could be introduced inside the hosting pipe by means of a slide, for example.

When the lining pipe recovers its thermostable state, given its previous shape, it will perfectly adhere to the hosting pipe without leaving any gaps in between, furthermore, it may also exert a pressure against the latter, if necessary.

Similarly, in the case of the connection of two or more pipes, whether accessible or not from the outside, the procedure consists in the introduction in the end of one of the two pipes of a pipe coupling, made of a thermoexpanding material in its thermoinstable state, the outside diameter of which, when it is in the thermostable state, is equal to or slightly larger than the pipe's inside diameter; in introducing the remaining part of the pipe coupling inside the end of the following pipe, still in its thermoinstable condition; in taking the pipe coupling to its thermostable state, following which the pipe coupling will perfectly adhere, with a certain pressure, to the ends of the two connected pipes, thus restoring the diameter of the pipes to be connected. Subsequently, it will also be possible to coat the outside surface of the pipe coupling and/or the inside surface of the pipe ends with an adhesive substance, in order to further seal the two objects, or pipes and the pipe coupling.

For a better understanding of this invention please read the following detailed description of the same, with reference to the attached figures showing axonometric drawings of several examples of hollow objects subjected to the procedure described in this invention. In particular:
figure 1 shows a partially cross-section view of a hollow cylindrical object provided with a cavity of a larger size than the object itself;
figure 2 is similar to figure 1, without a view of the inside;
figure 3 shows the material used to adapt and/or protect and/or restore the working oder of the inside of the hollow object, applied in its thermoinstable state to a carrying pipe;
figure 4 shows a pipe connection.

With reference to the aforementioned figures, 10 is the hollow object, part of the pipe 12, inside which the pipes 14 pass. The cavity 11 of the hollow object 10 will receive the material 15, which must give it a preestablished shape and/or size, and/or must protect the inside walls and/or seal them and/or isolate them, in general, it must restore it to working order.

According to this invention, the thermodeformable lining material 15, which has undergone a thermal process of size-reduction and which is in a thermoinstable state, is laid inside the sheath or hollow object 10. In such a state, the lining material 15 may be introduced inside the hollow object 10 in any moment of the procedure, or it may be introduced inside the hollow object 11 with suitable means, such as the pipes 14, through the extensions 12.

Once the thermodeformable material 13 has been introduced, in its thermoinstable state, inside the cavity 11 of the hollow object 10, by applying the necessary heat to the point in which the thermodeformable material 13 has been placed it will be possible to return it to its previous shape and size and to its thermostable state.

Consequently, by applying the thermodeformable material in its thermoinstable state, it is possible to line and/or adapt the inside of a hollow object, of any internal or external shape, and in the case in which it is impossible or in which one does not want to introduce the material 15 directly inside said hollow object, it is possible to place it in the desired point inside the cavity, by applying either traction or pressure, as already explained in the case of restoring a pipe to working order.

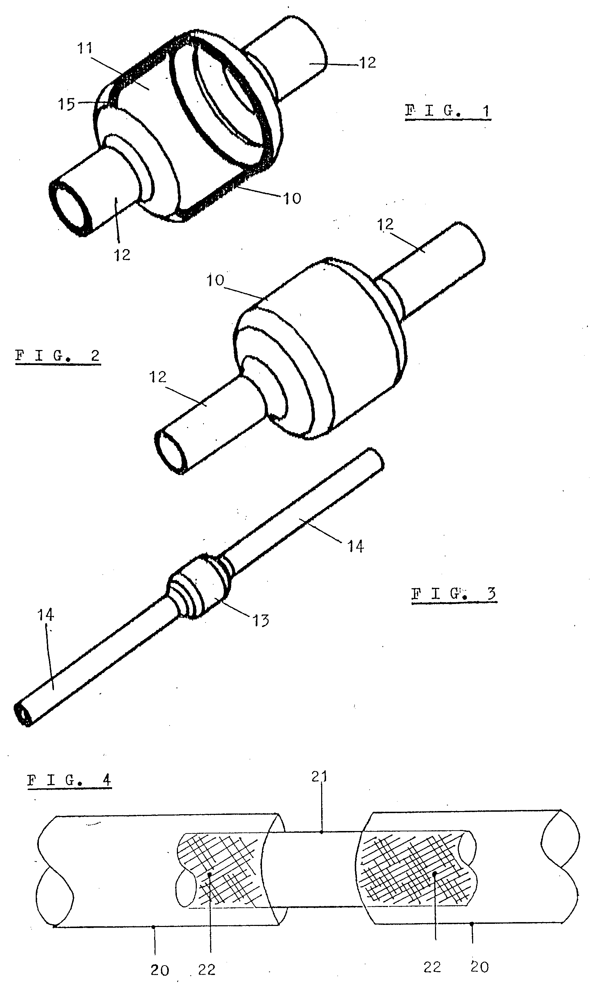

In the case of connecting two or more pipes, as shown in figure 4, a pipe coupling 21 is partially introduced, in its thermoinstable state, inside the end of the pipe 20; said pipe coupling in its thermostable state is of the same size as, or preferably, larger than the inside of the pipe 20. The remaining part of the pipe coupling 21 is then introduced inside the end of the other pipe 20 to be connected after which the pipe coupling 21 is returned to its thermostable state. In this manner, the pipe coupling adheres to the inside walls of the pipe with a pre-calculable pressure, which shall comply with all mandatory standards. In order to ensure the air-tight sealing of the connection, the outside surface of the coupling 21 and/or the inside of the pipes 20, may be sealed by means of an adequate adhesive substance 22.

The advantages offered by the procedure described in this invention are obvious. In particular, with regard to restoration to working order of pipes, the following features must be pointed out: the facility of introduction of the material in its thermoinstable state, by means of thrusting and pulling of the pipe to be restored; the possibility of lining great lengths of pipes, as also short hollow sections; the possibility of lining pipes with bends of any radius; no excavation or filling in works are required; the only employed means is heat, without the need for any kind of pressure; no filling materials are required between the inside surface of the object to be lined and the outside surface of the lining material, since the latter perfectly adheres to the former.

In the case of the connection of two pipes the features of this system are its inexpensiveness, speedy execution, the possibility of making connections on-site, since no particular tools are required and, most of all, its particular resistance to pressure because, since it acts from the inside towards the outside, it forces the thermoexpanding pipe coupling to perfectly adhere to the inside surface of the connected pipes, thus providing an adequate sealing also, regardless of whether or not any adhesive materials are used.

The procedure for adapting and/or protecting and/or restoring the working order of the inside of a hollow object and/or pipes and mains, which have undergone damage or which are no longer capable of working and to connect two or pipes and the means for carrying out this procedure have been described as non exclusive examples. Of course, it is possible to modify and correct this invention, in the light of experience. Therefore, it must be kept in mind that this invention may be implemented in a different manner from the one described in the following claims.

## Claims

1. A procedure for adapting and/or protecting and/or restoring the working order of the inside of a hollow object and/or pipes and mains, which have undergone damaged or which are no longer capable of working and to connect two or more objects, consisting in the following: the adaption of an element, made of a thermodeformable material provided with an elastic or plastic memory and in its thermostable state, to the hollow object or cavity in which it is placed, pipes and mains also, which requires formation and/or protection and/or restoration to full working order; the thermal deformation of said element, in order to make it take on the desired smaller shape, in its thermoinstable state; the introduction, inside the hollow object, of the aforementioned element, in its smaller shape consequent to its thermoinstable state; submitting said element to a thermal treatment, allowing it to recover its thermostable state, so as to enable the the material making up the element to adapt itself to and/or connect and/or form the lining of the hollow object, without having to gain direct access to the hollow object's inside from the outside.

2. A procedure according to the foregoing claim, consisting in the realization of a pipe, with a thermodeformable material, the outside diameter of which should not be smaller than the inside diameter of the pipe which is to be lined; in subjecting said pipe made of a thermodeformable material to the necessary treatment, so that it may take on, in its thermoinstable state, the shape of a pipe with a considerably smaller outside diameter; in winding said pipe, if necessary and in its thermoinstable state, around a special reel, located independently of the pipe to be restored to working order; in the introduction of the lining pipe, in its thermoinstable state and preferably by means of traction, inside the pipe to be restored to working order; once the introduction of the lining pipe has been completed, the procedure consists in subjecting the introduced pipe to the necessary thermal treatment for enabling it to recover its thermostable state, until it perfectly adapts itself to the inside shape and size of the pipe which is to be lined.

3. A procedure, according to the foregoing claim 2, characterized by the reduction of the diameter of the lining pipe, when in its thermoinstable state, of between one third and one tenth of the inside diameter of the hosting pipe, accompanied by an elongation which is proportional to the pipe's new cross-section.

4. A procedure, according to the foregoing claims 1 and/or 2, characterized by the fact that the introduction of the pipe changed in its cross-section and length and in its thermoinstable state, inside the the pipe which is to be restored to working order is carried out by means of a traction exercised on its free end, with a guide rope, for example, or by means of the application of continuous or discontinuous pressure, whatever its length and regardless of the presence of bends, given the considerable difference in the diameters and flexibility of the lining pipe.

5. A procedure according to one or more of the foregoing claims, characterized by the fact that once the lining pipe has been introduced inside the hosting pipe, the former is taken from its thermoinstable to its thermostable state by means of the application of heat, piping a hot fluid along the entire section of the pipe concerned by the procedure.

6. A procedure according to one or more of the foregoing claims, characterized by the fact that, in the case of the connection of two or more pipes, a pipe coupling made of a thermoexpandable material and the outside diamter of which is equal to or, preferably, slightly larger than the inside diameter of the hosting pipe, is introduced, in its thermoinstable state, into the end of one of the pipes to be connected, while the remaining part of the coupling is then introduced inside the end of the other pipe to be connected and, subsequently, the procedure for having the coupling recover its thermostable state is applied.

7. A procedure according to the foregoing claim 6, characterized by tha fact that, in order to achieve a greater sealing capacity, the outside surface of the pipe coupling and/or the inside surfaces of the ends of the pipes to be connected are provided with a suitable adhesive substance.

8. Procedure according to one or more of the foregoing claims, characterized by the fact that the means used for heating the lining material consists of a nozzle spouting, for example, an adequately fed flame, the nozzle being placed inside the hosting object by means of a slide.

9. The means for executing the procedure according to one or more of the foregoing claims, characterized by the fact that said means essentially consist of a thermodeformable material, such as to be taken from any basic shape in which it is found in its thermostable state, to a reduced thermoinstable state, from which it may then return to its thermostable state following the application of heat.
